# EUROPEAN PATENT APPLICATION

(11) **EP 4 303 535 A1**
(43) Date of publication of application: **10.01.2024**
(21) Application number: 22762540.7
(22) Date of filing: 02.03.2022
(51) Int. Cl.: G01C 9/00

(54) **MEASURING DEVICE, MEASURING MECHANISM, MEASURING SYSTEM AND MEASURING METHOD**

(30) Priority: 03.03.2021 CN 202110237598
(71) Applicant: Chengdu Alangtech Co., Ltd., Chengdu, Sichuan 611130 (CN)
(72) Inventor: PENG, Zhixiang, Chengdu, Sichuan 611130 (CN); HE, Jianguo, Chengdu, Sichuan 611130 (CN); PENG, Peng, Chengdu, Sichuan 611130 (CN); WANG, Zhouke, Chengdu, Sichuan 611130 (CN); FENG, Menglin, Chengdu, Sichuan 611130 (CN); GUO, Wenbin, Chengdu, Sichuan 611130 (CN)
(74) Representative: Lermer, Christoph
(86) International application number: PCT/CN2022/078726
(87) International publication number: WO 2022/184076

(57) **Abstract**

A measuring device, a measuring mechanism, a measuring system and a measuring method, wherein: the measuring device comprises a swing arm and an automatic detection device, the swing arm allows a straightened line to pass through or can be attached to a straightened line, and the automatic detection device comprises a swing angle measuring device, which is connected to the swing arm and is used for automatically measuring a swing angle of the swing arm. In the present disclosure, straightness or perpendicularity of the straightened line serves as a measurement reference, so that accuracy of measurement data can be ensured, and the solution is simple and can be easily carried out; since the automatic detection device is used for automatic measurement, requirements on measurers are lowered, errors caused by manual measurement of measurers are avoided and safety risks are reduced; measurement information at multiple points can be obtained at the same time, and straightness, perpendicularity, inclination angle, flatness, torsion and other parameters of an object to be measured can be obtained.

## Description

### Technical Field

The present disclosure relates to the technical field of engineering measurement, in particular to a measuring device, a measuring mechanism, a measuring system and a measuring method.

### Background

At present, most equipment, tracks, panels and other facilities with installation requirement on perpendicularity generally use apparatuses, such as a hanging vertical line, a collimator or the like, for manual measurement, during which measurement errors caused by reading of measurers and ambient interference cannot be well controlled; meanwhile, the measurement equipment needs to be repeatedly mounted at sites of multiple constructions, and the measurers are required to climb up and down for measurement at different heights, so major security risks exist; moreover, these measurement apparatuses require operations by professional measurers, and have relatively high requirements on measurers.

### Summary

The object of the present disclosure is to provide a measuring device, a measuring mechanism, a measuring system and a measuring method, so as to solve problems existing in the prior art.

To realize the afore-mentioned object, the technical solution adopted in the present disclosure is as follows.

A measuring device, comprising a swing arm and an automatic detection device, where: the swing arm allows a straightened line to pass through or can be attached to a straightened line, and the automatic detection device comprises a swing angle measuring device, which is connected to the swing arm and is used for automatically measuring a swing angle of the swing arm.

In the present application, a straightened line, which is a straightened and stretched line segment, i.e. a non-loose and non-curved one, is provided; straightness or perpendicularity of the straightened line is used as a measurement reference; moreover, a swing arm is provided so that the straightened line passes through the swing arm or the swing arm is attached to the straightened line, as a result, a specific position of a contact point of the swing arm and the straightened line can be determined, and then the swing angle of the swing arm can be automatically measured via the automatic detection device, and accurate measurement is thus realized.

In the present disclosure, straightness or perpendicularity of the straightened line serves as a measurement reference, so that multiple measuring devices can be arranged and accurate positions of multiple contact points can be ensured, as a result, automatic measurement can be performed at multiple measurement points, and straightness, perpendicularity, inclination angle, flatness, torsion and other parameters of an object to be measured can be obtained.

In the present disclosure, straightness or perpendicularity of the straightened line serves as a measurement reference, so that accuracy of measurement data can be ensured, and the solution is simple and can be easily carried out; since the automatic detection device is used for automatic measurement, requirements on measurers are lowered, errors caused by manual measurement of measurers are avoided and safety risks are reduced.

As a preferable solution of the present disclosure, the swing arm is provided with a through hole or a slot, where: the through hole or the slot fits with the straightened line, and allows the straightened line to pass through. A size of the through hole or slot is basically consistent with an outline of the straightened line, so that a position of the contact point of the swing arm and the straightened line is maintained during the measurement, and the measurement accuracy is thus enhanced.

As a preferable solution of the present disclosure, the swing arm is provided with a magnetic substance, which can be attached to the straightened line. The magnetic substance is attached to the straightened line, so that a position of the contact point of the swing arm and the straightened line is maintained during the measurement, and the measurement accuracy is thus enhanced.

As a preferable solution of the present disclosure, the swing arm is provided with a through hole or a slot; and a magnetic substance is mounted at the through hole or the slot, which allows the straightened line to pass through, and can be attached to the straightened line. A size of the through hole or slot is basically consistent with an outline of the straightened line, and the magnetic substance is attached to the straightened line, so that a position of the contact point of the swing arm and the straightened line is maintained during the measurement, and the measurement accuracy is thus enhanced.

As a preferable solution of the present disclosure, the magnetic substance comprises a magnet, a lodestone or the like.

As a preferable solution of the present disclosure, the swing angle measuring device is capable of converting a swing angle of the swing arm into an electrical signal for the convenience of outward transmission of measurement information, and comprises an encoder, or a potentiometer, or an angle sensor or the like.

As a preferable solution of the present disclosure, a pressing rod is further comprised, where: the pressing rod is used for tightly pressing the measurement point, and is fixedly connected to the swing angle measuring device. In use, an external force can be applied so that a front end of the pressing rod tightly presses the measurement point, and accuracy of the measurement information is thus guaranteed.

As a preferable solution of the present disclosure, an elastic element is further comprised, by means of which the pressing rod is fixedly connected to the swing angle measuring device. The elastic element is provided, so that the front end of the pressing rod tightly presses the measurement point.

As a preferable solution of the present disclosure, the automatic detection device further comprises a distance measuring device, which is fixedly connected to the swing angle measuring device, is used for automatically measuring a linear distance from the swing angle measuring device to the measurement point, and comprises a laser distance sensor or an ultrasonic distance sensor. The distance measuring device adopts a method of non-contact measurement, and can be more easily mounted and implemented.

As a preferable solution of the present disclosure, the measuring device can slide along the straightened line. While sliding, the automatic detection device performs automatic measurement for different measurement points, so as to obtain straightness, perpendicularity, inclination angle, flatness, torsion and other parameters of an object to be measured.

As a preferable solution of the present disclosure, the measuring device is fixedly connected to a convex member, and an end of the convex member is provided with a roller so that the convex member can slide along a measurement plane.

The present disclosure further discloses a measuring mechanism, comprising a straightened line and any of the measuring devices, where: the straightened line passes through the swing arm, or the swing arm is attached to the straightened line.

As a preferable solution of the present disclosure, the straightened line is a plumb line or a cable-stayed line, and it is only required that the straightened line is in a straightened state, rather than a loose and curved state.

The present disclosure further discloses a measuring system, comprising a straightened line and a plurality of any of the measuring devices, where: all of the measuring devices are arranged at intervals along the straightened line, the straightened line passes through all of the swing arms, or all of the swing arms are attached to the straightened line.

The present disclosure further discloses a measuring method, comprising:
Step I: providing a straightened line aside of a measurement plane, and fixedly mounting a plurality of any of the measuring devices on or near the measurement plane, where: all of the measuring devices are arranged at intervals along the straightened line, and the straightened line passes through all of the swing arms, or all of the swing arms are attached to the straightened line;
Step II: performing automatic measurement by means of the automatic detection device; and
Step III: obtaining straightness of the measurement plane by means of reading of measurement information at different measurement points at the same time. Here, the obtaining of straightness of the measurement plane comprises two situations, one is to determine whether the measurement plane is straight, and the other is to calculate specific value of straightness of the measurement plane. Either of the situations falls within the scope of protection of the present disclosure.

As a preferable solution of the present disclosure, in the Step I, there are at least two of the straightened lines, all of the straightened lines are provided in parallel, and each of the straightened lines is fixedly mounted with a plurality of any of the measuring devices; and, in the Step III, straightness and flatness of the measurement plane are obtained by means of reading of measurement information at different measurement points at the same time. Here, the obtaining of flatness of the measurement plane comprises two situations, one is to determine whether the measurement plane is straight, and the other is to calculate specific value of flatness of the measurement plane. Either of the situations falls within the scope of protection of the present disclosure.

As a preferable solution of the present disclosure, in the Step II, measurement information of the automatic detection device is sent to a control device, and, in the Step III, the control device processes the measurement information, calculates straightness or flatness of the measurement plane, and displays the straightness or flatness of the measurement plane in real time.

As a preferable solution of the present disclosure, in the Step III, the control device alarms when the measurement information, and/or straightness and/or flatness obtained via calculation go beyond a threshold value.

The present disclosure further discloses a measuring method, comprising:
Step I: providing a straightened line, which is a vertical, aside of a measurement plane, and mounting any of the measuring devices on the straightened line, where: the straightened line passes through the swing arm, or the swing arm is attached to the straightened line;
Step II: the measuring device slides downwards along the straightened line under the action of external forces, and the automatic detection device performs automatic measurement for different measurement points during sliding; and
Step III: obtaining straightness of the measurement plane by means of reading of measurement information in real time. Here, the obtaining of straightness of the measurement plane comprises two situations, one is to determine whether the measurement plane is straight, and the other is to calculate specific value of straightness of the measurement plane. Either of the situations falls within the scope of protection of the present disclosure.

Since the measuring device slides downwards along the straightened line, it is easy to measure and obtain the measurement information at different heights, so that straightness of the measurement plane can be calculated; the solution is simple and can be easily performed, and the measurement accuracy is high.

As a preferable solution of the present disclosure, in the Step II, measurement information of the automatic detection device is sent to a control device, and, in the Step III, the control device processes the measurement information, calculates straightness of the measurement plane, and displays the straightness of the measurement plane in real time.

As a preferable solution of the present disclosure, in the Step III, the control device alarms when the measurement information and/or straightness obtained by means of calculation go beyond a threshold value.

Based on the afore-mentioned measuring device, the present disclosure further provides a truss structure with the measuring device, comprising: a vertical truss structure and a base that is movable up and down along the vertical truss structure, where: the automatic detection device or the swing arm is mounted on the base.

As a preferable solution of the afore-mentioned truss structure, the automatic detection device is fixedly mounted on the base and further comprises a distance measuring device; the distance measuring device is fixedly connected to the swing angle measuring device, is used for automatically measuring a linear distance from the swing angle measuring device to a measurement point, and comprises a laser distance sensor or an ultrasonic distance sensor.

To sum up, due to the afore-mentioned technical solution, the present disclosure can produce the following beneficial effects.
1. In the present disclosure, a straightened line, which is a straightened and stretched line segment, i.e. a non-loose and non-curved one, is provided; straightness or perpendicularity of the straightened line is used as a measurement reference; moreover, a swing arm is provided so that the straightened line passes through the swing arm or the swing arm is attached to the straightened line, as a result, a specific position of a contact point of the swing arm and the straightened line can be determined, and then the swing angle of the swing arm can be automatically measured via the automatic detection device, and accurate measurement is thus realized.
2. In the present disclosure, straightness or perpendicularity of the straightened line serves as a measurement reference, so that multiple measuring devices can be arranged and accurate positions of multiple contact points can be ensured, as a result, automatic measurement can be performed at multiple measurement points, and straightness, perpendicularity, inclination angle, flatness, torsion and other parameters of an object to be measured can be obtained.
3. In the present disclosure, straightness or perpendicularity of the straightened line serves as a measurement reference, so that accuracy of measurement data can be ensured, and the solution is simple and can be easily carried out; since the automatic detection device is used for automatic measurement, requirements on measurers are lowered, errors caused by manual measurement of measurers are avoided and safety risks are reduced.

### Brief Description of Drawings

Fig. 1 is a structure diagram of the measuring mechanism in Example 1 of the present disclosure.
Fig. 2 is a structure diagram of the measuring system in Example 1 of the present disclosure.
Fig. 3 is a structure diagram of the measuring mechanism in Example 2 of the present disclosure.
Fig. 4 is a structure diagram of the measuring system in Example 2 of the present disclosure.
Fig. 5 is a structure diagram of the measuring mechanism in Example 3 of the present disclosure.
Fig. 6 is a structure diagram of the measuring system in Example 3 of the present disclosure.
Fig. 7 is a structure diagram of the swing arm in Example 4 of the present disclosure.
Fig. 8 is a structure diagram of the swing arm in Example 5 of the present disclosure.
Fig. 9 is a structure diagram for Example 6 of the present disclosure.
Fig. 10 is a structure diagram of the measuring mechanism in Example 7 of the present disclosure.
Fig. 11 is a structure diagram of the measuring system in Example 7 of the present disclosure.
Fig. 12 is a structure diagram of the measuring device in Example 8 of the present disclosure.
Fig. 13 is a structure diagram of the measuring mechanism in Example 8 of the present disclosure.
Fig. 14 is a diagram showing the truss structure in examples of the present disclosure.
Fig. 15 is an amplified diagram showing a part of the measuring device in the example shown in Fig. 14 after removal of the truss structure.

Marks in drawings: 1-Straightened line, 2-Plumb, 3-Swing arm, 4-Swing angle measuring device, 5-Pressing rod, 6-Fixing frame, 7-Measurement plane, 8-Distance measuring device, 9-Through hole, 10-Fixing arm, 11-Linear displacement sensor, 12-Convex member, 13-Roller, 14-Beam, 15-Slot, 16-Magnetic substance ,17-Vertical truss structure, 18-Base.

### Embodiments

With reference to the drawings, the present disclosure will be explained in details.

To make the object, technical solution and advantages of the present disclosure clearer, the present disclosure will be further explained in details with reference to the drawings and examples. It should be understood that specific examples described here are merely used for explaining the present disclosure, rather than limiting.

### Example 1

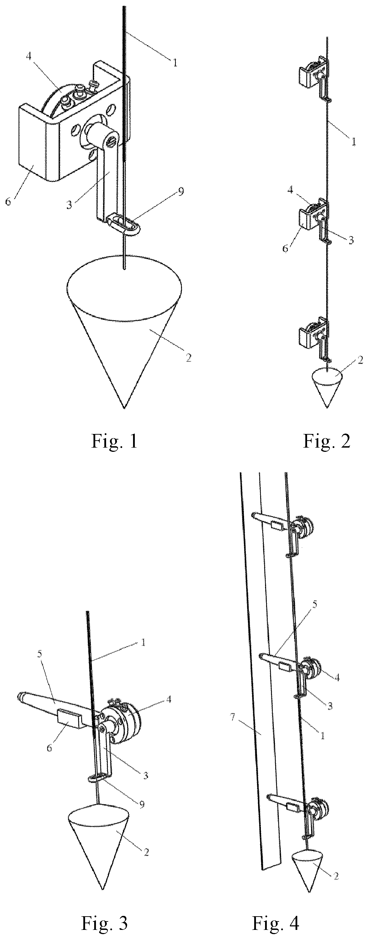

Fig. 1 shows a measuring mechanism, comprising a straightened line 1 and a measuring device.

In this example, the straightened line 1 is a plumb line, the bottom of the straightened line 1 is hanged with a plumb 2 while the top of the straightened line 1 may be fixed at any fixed point, and the straightened line 1 serves as a reference during measurement.

In this example, the measuring device comprises a swing arm 3, a swing angle measuring device 4 and a fixing frame 6, the swing arm 3 is mounted on the swing angle measuring device 4, and the swing angle measuring device 4 is fixed to an object to be measured via the fixing frame 6. The swing angle measuring device 4 comprises an encoder, or a potentiometer, or an angle sensor or the like.

The swing arm 3 is provided with a through hole 9, the through hole 9 fits with the straightened line 1 (namely, the inner diameter of the through hole 9 is almost the same as the outer diameter of the straightened line 1), and the straightened line 1 passes through the through hole 9. The contact position of the through hole 9 and the straightened line 1 is the contact point.

Therefore, the plumb line maintains plumbness due to gravity, the measuring device is fixed to the object to be measured, and the measuring device is in contact with the plumb line via the through hole 9 on the swing arm 3. When the position of the object to be measured changes (e.g. inclination and so on), the swing arm 3 will swing, a swing angle of the swing arm 3 will be obtained via the swing angle measuring device 4, and then a new position of the object to be measured can be calculated. Data collected many times at a measurement point (the measurement point refers to the contact point of the measuring device and the object to be measured in the case of contact measurement, as in this example, or a position from which laser or ultrasound of the measuring device is emitted to the object to be measured in the case of non-contact measurement, as in Example 3) can reflect spatial position changes of the object to be measured over time. The data obtained by the swing angle measuring device 4 can be directly transmitted outwards to a control device, and the control device transmits the collected data to a computer, a mobile phone or other devices capable of processing data in a wired (a network cable, a usb cable and so on) or wireless (WIFI, mobile communication and so on) manner, as a result, it is easy to perform data processing and analyzing and to give an alarm.

Fig. 2 shows a measuring system, comprising a straightened line 1 and a plurality of the measuring devices; all of the measuring devices are arranged at intervals along the straightened line 1, and the straightened line 1 passes through all of the through holes 9. In other words, multiple measuring devices are fixedly mounted on the object to be measured, and the through holes 9 on the swing arm 3 of each of the measuring device are all in contact with the straightened line 1, as a result, it is ensured that all of the through holes 9 are on a single plumb line, and that all of the through holes 9 are vertically arranged. In this case, since the measuring system is arranged on the object to be measured, measurement information of multiple measurement points (referring to mounting positions of multiple measuring devices in this example) can be obtained at the same time, and straightness, perpendicularity, inclination angle or the like of the object to be measured can be thus obtained. It should be noted that, after obtaining of the swing angles of the swing arm 3 at multiple measurement points, it is possible to preliminarily determine, without calculation, whether the measurement plane 7 is vertical according to consistency of the swing angles, as a result of which straightness of the measurement plane 7 is obtained. Then, if necessary, straightness, perpendicularity, inclination angle and so on of the measurement plane 7 can be obtained via specific conversion.

Further, straightness and flatness, torsion and other parameters of the measurement plane 7 can be obtained by the providing of two straightened lines 1, which are parallel to each other and each of which is fixedly mounted with multiple of the measuring devices, and by the reading of measurement information at different measurement points at the same time.

### Example 2

As shown in Fig. 3, the difference between Example 2 and Example 1 lies in that the measuring device in a measuring mechanism of Example 2 further comprises a pressing rod 5, which is fixedly connected to the swing angle measuring device 4.

In this case, the measuring device is fixed to a certain structure close to the object to be measured via the fixing frame 6 when it is mounted, and the structure (e.g. by using a linear guide way) of the fixing frame 6 is designed so as to make sure that the pressing rod 5 of the measuring device maintains linear movement, while the pressing rod 5 of the measuring device will tightly press the object to be measured, so that the movement of the pressing rod 5 reflects the position changes of the object to be measured. During measurement, the pressing rod 5 is supposed to tightly press the object to be measured all the time, for instance, by means of external forces, or by providing an elastic element, such as a spring, on the pressing rod 5, so that the pressing rod 5 can tightly press the object to be measured all the time.

When the position of the object to be measured changes (e.g. inclination and so on), linear displacement will occur to the pressing rod 5 and the swing arm 3 will be brought to swing, then a swing angle of the swing arm 3 can be obtained via the swing angle measuring device, and a new position of the object to be measured can be calculated.

Fig. 4 shows a measuring system, comprising a straightened line 1 and a plurality of the measuring devices. The plurality of the measuring devices are arranged at different positions on the measurement plane 7, so that measurement information at multiple measurement points can be obtained at the same time, and straightness, perpendicularity, inclination angle and so on of the measurement plane 7 are thus obtained.

### Example 3

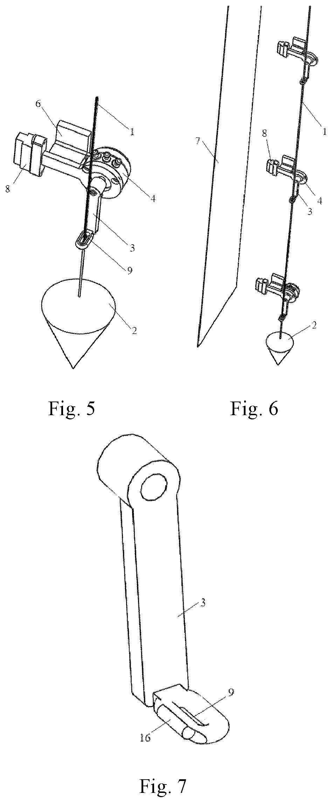

As shown in Fig. 5, the difference between Example 3 and Example 1 lies in that the measuring device of a measuring mechanism in Example 3 further comprises a distance measuring device 8, where: the distance measuring device 8 is fixedly connected to the swing angle measuring device 4, and is used for measuring a distance from the swing angle measuring device 4 to a measurement point. The distance measuring device 8 comprises a laser distance sensor, or an ultrasonic distance sensor or the like.

In this case, the measuring device is fixed to a certain structure close to the object to be measured via the fixing frame 6 when it is mounted, and the measuring device does not need to be in direct contact with the object to be measured. During measurement, a distance *d* from the through hole 9 on the swing arm 3 to a measurement point is divided into *d1* and *d2,* i.e., *d*=*d1*+*d2. d1* is the distance from the swing angle measuring device 4 to a measurement point on the object to be measured, and can be directly measured by using the swing angle measuring device 4, and *d2* is the distance from the swing angle measuring device 4 to the through hole 9 and can be obtained by converting the swing angle of the swing arm 3 measured by using the swing angle measuring device 4. Both the data obtained by the distance measuring device 8 and that obtained by the swing angle measuring device 4 can be directly transmitted outwards to a computer, a mobile phone or other mechanisms, so as to be processed and analyzed.

Fig. 6 shows a measuring system, comprising a straightened line 1 and a plurality of the measuring devices, when it needs to measure perpendicularity of the measurement plane 7. The plurality of the measuring devices is arranged in sequence from the top down at different positions on the measurement plane 7, and the straightened line 1 passes through all of the through holes 9. The straightened line 1 (which serves as a measurement reference) is provided to make sure that all of the through holes 9 are on a single plumb line; when the measurement plane 7 inclines, different distances d will be obtained at different measurement points, and then straightness, perpendicularity, inclination angle and so on of the measurement plane7 can be calculated.

### Example 4

As shown in Fig. 7, Example 4 is basically the same as Examples 1 to 3, and the difference merely lies in the structure of the swing arm 3. Specifically, in Example 4, a magnetic substance 16 is mounted at the through hole 9, the straightened line 1 adopts a stranded wire, and then the magnetic substance 16 (comprising a magnet, a lodestone or the like) is provided so that the through hole 9 fit further tightly with the straightened line 1, as a result, the contact position of the through hole 9 and the straightened line 1 is more accurate, so is the measurement information.

### Example 5

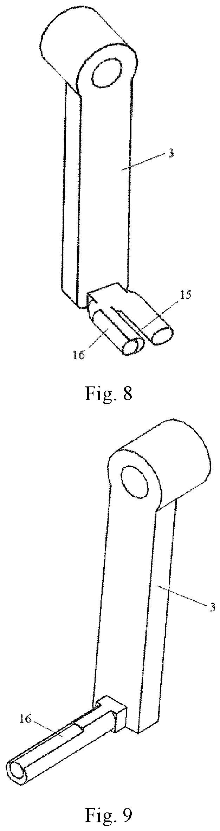

As shown in Fig. 8, the difference between Example 5 and Example 4 lies in that the through hole 9 of the swing arm 3 is replaced with a slot 15, and the magnetic substance 16 is mounted at the slot 15.

### Example 6

As shown in Fig. 9, Example 6 is basically the same as Examples 1 to 3, and the difference merely lies in the structure of the swing arm 3. Specifically, in Example 6, the swing arm 3 is directly provided with a magnetic substance 16, rather than a through hole 9, and the swing arm 3 is attached to the straightened line 1 via the magnetic substance 16.

### Example 7

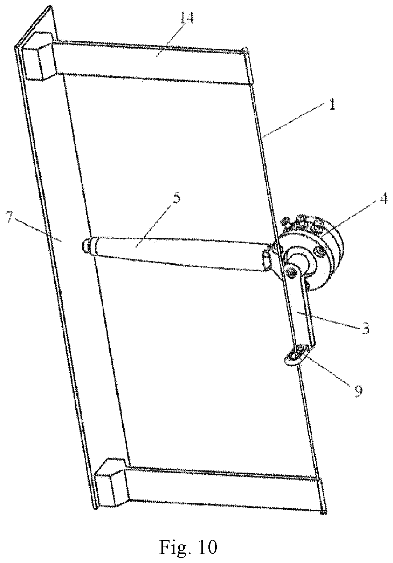

As shown in Figs. 10 to 11, the difference between Example 7 and Example 2 lies in that the straightened line 1 in Example 7 is not a plumb line; instead, it is a straightened or stretched line segment, which can be vertical or inclined. Specifically, a tightener may be provided at an end of the straightened line 1, so that the segment is stretched and the straightened line 1 is realized. In Example 7, two ends of the straightened line 1 are fixed on the measurement plane 7 via beams 14. Since the straightened line 1 serves as a reference during measurement, it is necessary to adopt a non-loose and non-curved segment; there are many ways of stretching or straightening a segment, but they will not be described in details here.

When the straightened line 1 is vertical, the principle thereof is completely the same as that in Example 2, and will not be described in details here.

When the straightened line 1 is inclined, a plurality of the measuring devices can also be arranged on the measurement plane 7, so as to obtain measurement information at multiple measurement points at the same time; the only thing needs to do is to take into account the slope of the inclined line during data processing.

### Example 8

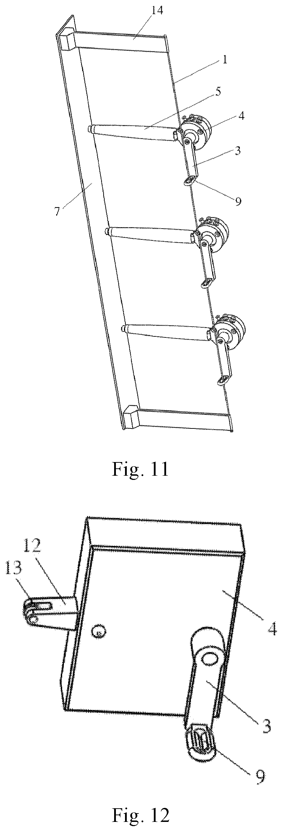

Figs. 12 to 13 show a measuring mechanism, comprising a straightened line 1 and a measuring device.

In Example 8, the straightened line 1 is not a plumb line; instead, it is a straightened or stretched vertical. Specifically, a tightener may be provided at an end of the straightened line 1, so that the segment is stretched and the straightened line 1 is realized. In Example 8, two ends of the straightened line 1 are fixed on the measurement plane 7 via beams 14. Since the straightened line 1 serves as a reference during measurement, it is necessary to adopt a non-loose and non-curved segment; there are many ways of stretching or straightening a segment, but they will not be described in details here.

In Example 8, the measuring device comprises a swing arm 3 and a swing angle measuring device 4, where: the swing arm 3 is mounted on the swing angle measuring device 4 and is provided with a through hole 9, the through hole 9 fits with the straightened line 1, the straightened line 1 passes through the through hole 9, and the measuring device can slide along the straightened line 1.

Further, a convex member 12 may be fixedly connected to one end of the swing angle measuring device 4, and an end of the convex member 12 is provided with a roller 13. In use, the roller 13 can directly slide on the object to be measured.

Therefore, during measurement, the measuring device is arranged on the surface of the object to be measured, the roller 13 is in contact with the surface of the object to be measured, and the measuring device slides downwards along the straightened line 1 under the action of gravity; since information varies for distances from different measurement points to the straightened line 1, the swing arm 3 will swing while sliding, then it is possible to accurately measure position information at different heights on the surface of the object to be measured, and perpendicularity, inclination angle and other parameters of the object to be measured are thus obtained.

### Example 9

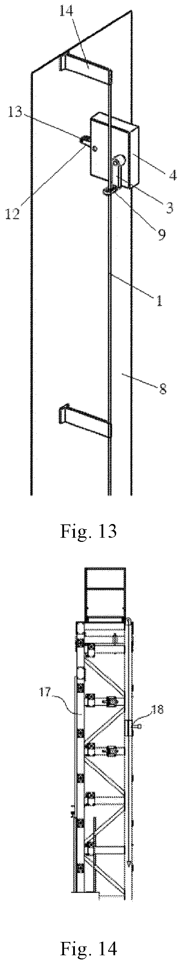

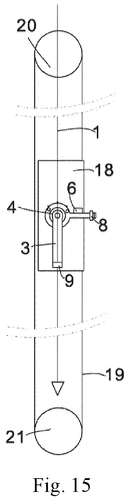

Based on the afore-mentioned measuring device, Example 9 in the present disclosure, as shown in Figs. 14 to 15, provides a truss structure with such measuring device, comprising a vertical truss structure 17 and further comprising a base 18 capable of moving up and down along the vertical truss structure 17. As shown in Fig. 15, the base 18 is fixedly mounted on a synchronous traction belt 19, one section of which fits a stepper motor 20 and one end fits a standing pulley 21. The stepper motor 20 drives the synchronous traction belt 19 so as to bring the base 18 to move up and down. A measuring device, which is the same as that in Example 3, is fixedly mounted on the base 18, and the fixing frame 6 therein is fixedly mounted on the base 18. The base 18 may synchronously measure perpendicularity of the object to be measured while it is driven to move up and down by the stepper motor 20, and may also perform real-time continuous measurement while moving, so as to form a complete monitoring record. In Example 9, the base 18 may also be driven to move up and down by other mechanical driving methods in the prior art, such as fitting of pinion and rack, self-walking guide way and so on. The base 18 may also be mounted with any of the measuring devices in the afore-mentioned examples, so that perpendicularity of the object to be measured can be measured while the base 18 is moving up and down.

The truss structure in Example 9 is particularly suitable for high-rise building construction, water conservancy and hydropower dam construction and other construction fields.

Afore-mentioned are merely preferable examples of the present disclosure, rather than limits of the present disclosure. Any amendment, equivalent replacement, improvement and so on made within the spirit and principle of the present disclosure should be included in the scope of protection of the present disclosure.

## Claims

1. A measuring device, comprising a swing arm (3) and an automatic detection device, wherein: the swing arm (3) allows a straightened line (1) to pass through or can be attached to a straightened line (1), and the automatic detection device comprises a swing angle measuring device (4), which is connected to the swing arm (3) and is used for automatically measuring a swing angle of the swing arm (4).

2. The measuring device according to claim 1, wherein: the swing arm (3) is provided with a through hole (9) or a slot (15), and the through hole (9) or the slot (15) fits with the straightened line (1) and allows the straightened line (1) to pass through.

3. The measuring device according to claim 1, wherein: the swing arm (3) is provided with a magnetic substance (16), which can be attached to the straightened line (1).

4. The measuring device according to claim 1, wherein: the swing arm (3) is provided with a through hole (9) or a slot (15); and a magnetic substance (16) is mounted at the through hole (9) or the slot (15), which allows the straightened line (1) to pass through, and can be attached to the straightened line (1).

5. The measuring device according to claim 3 or 4, wherein: the magnetic substance (16) comprises a magnet, or a lodestone.

6. The measuring device according to claim 1, wherein: the swing angle measuring device (4) is capable of converting a swing angle of the swing arm (3) into an electrical signal, and comprises an encoder, or a potentiometer, or an angle sensor.

7. The measuring device according to claim 6, wherein: further comprises a pressing rod (5), which is used for tightly pressing a measurement point, and is fixedly connected to the swing angle measuring device (4).

8. The measuring device according to claim 7, wherein: an elastic element is further comprised, by means of which the pressing rod (5) is fixedly connected to the swing angle measuring device (4).

9. The measuring device according to claim 1, wherein: the automatic detection device further comprises a distance measuring device (8), which is fixedly connected to the swing angle measuring device (4), is used for automatically measuring a linear distance from the swing angle measuring device (4) to the measurement point, and comprises a laser distance sensor or an ultrasonic distance sensor.

10. The measuring device according to claim 7, wherein: the measuring device can slide along the straightened line (1).

11. The measuring device according to claim 10, wherein: the measuring device is fixedly connected to a convex member (12), and an end of the convex member (12) is provided with a roller (13).

12. A measuring mechanism, comprising a straightened line (1) and a measuring device according to claim 1, wherein: the straightened line (1) passes through the swing arm (3), or the swing arm (3) is attached to the straightened line (1).

13. The measuring mechanism according to claim 12, wherein: the straightened line (1) is a plumb line or a cable-stayed line.

14. A measuring system, comprising a straightened line (1) and a plurality of the measuring devices according to claim 1, wherein: all of the measuring devices are arranged at intervals along the straightened line (1), the straightened line (1) passes through all of the swing arms (3), or all of the swing arms (3) are attached to the straightened line (1).

15. A measuring method, comprising:
Step I: providing a straightened line (1) aside of a measurement plane (7), and fixedly mounting a plurality of any of the measuring devices according to claims 1 to 9 on or near the measurement plane (7), wherein: all of the measuring devices are arranged at intervals along the straightened line (1), and the straightened line (1) passes through all of the swing arms (3), or all of the swing arms (3) are attached to the straightened line (1);
Step II: performing automatic measurement by means of the automatic detection device; and
Step III: obtaining straightness of the measurement plane (7) by means of reading of measurement information at different measurement points at the same time.

16. The measuring method according to claim 15, wherein: in the Step I, there are at least two of the straightened lines (1), all of the straightened lines (1) are provided in parallel, and each of the straightened lines (1) is fixedly mounted with a plurality of any of the measuring devices according to claims 1 to 9; and, in the Step III, straightness and flatness of the measurement plane (7) are obtained by means of reading of measurement information at different measurement points at the same time.

17. The measuring method according to claim 16, wherein: in the Step II, measurement information of the automatic detection device is sent to a control device; and, in the Step III, the control device processes the measurement information, calculates straightness or flatness of the measurement plane (7), and displays the straightness or flatness of the measurement plane (7) in real time.

18. The measuring method according to claim 17, wherein: in the Step III, the control device alarms when the measurement information, and/or straightness and/or flatness obtained via calculation go beyond a threshold value.

19. A measuring method, comprising:
Step I: providing a straightened line (1), which is a vertical, aside of a measurement plane (7), and mounting the measuring device according to claim 10 on the straightened line (1), wherein: the straightened line (1) passes through the swing arm (3), or the swing arm (3) is attached to the straightened line (1);
Step II: the measuring device slides downwards along the straightened line (1) under the action of external forces, and the automatic detection device performs automatic measurement for different measurement points during sliding; and
Step III: obtaining straightness of the measurement plane (7) by means of reading of measurement information in real time.

20. The measuring method according to claim 19, wherein: in the Step II, measurement information of the automatic detection device is sent to a control device; and, in the Step III, the control device processes the measurement information, calculates straightness of the measurement plane (7), and displays the straightness of the measurement plane in real time.

21. The measuring method according to claim 20, wherein: in the Step III, the control device alarms when the measurement information and/or straightness obtained by means of calculation go beyond a threshold value.

22. A truss structure with the measuring device according to claim 1, comprising a vertical truss structure (17), wherein: the measuring device further comprises a base (18) that is movable up and down along the vertical truss structure (17), and the automatic detection device or the swing arm (3) is mounted on the base.

23. The truss structure according to claim 22, wherein: the automatic detection device is fixedly mounted on the base (18) and further comprises a distance measuring device (8); the distance measuring device (8) is fixedly connected to the swing angle measuring device (4), is used for automatically measuring a linear distance from the swing angle measuring device (4) to a measurement point, and comprises a laser distance sensor or an ultrasonic distance sensor.
